# EUROPÄISCHE PATENTSCHRIFT

(11) **EP 0 669 231 B1**
(45) Veröffentlichungstag und Bekanntmachung des Hinweises auf die Patenterteilung: **21.07.1999**
(21) Anmeldenummer: 95101448.9
(22) Anmeldetag: 03.02.1995
(51) Int. Cl.: B60R 21/26, C06D 5/06

(54) **Hybrid-Gasgenerator zum Füllen eines Gassacks**
Hybride gasgenerator for inflation of a gasbag
Générateur de gaz hybride pour gonfler un sac à gaz

(30) Priorität: 24.02.1994 DE 4405997
(43) Veröffentlichungstag der Anmeldung: 30.08.1995
(73) Patentinhaber: TRW Airbag Systems GmbH & Co. KG, 84544 Aschau am Inn (DE)
(72) Erfinder: Adam, Paul, D-80469 München (DE); Renn, Peter, D-82054 Taufkirchen (DE); Tillmann, Heinz, D-85521 Riemerling (DE); Reif, Joachim, D-82054 Sauerlach (DE); Werner, Michael, D-85635 Höhenkirchen-Siegertsbrunn (DE); Dölling, Uwe, D-84431 Heldenstein (DE)
(74) Vertreter: Sulzbach, Werner, Dipl.-Chem. Dr.

(56) Entgegenhaltungen:
- EP-A- 0 445 474
- EP-A- 0 559 335

## Beschreibung

Die Erfindung betrifft einen Hybrid-Gasgenerator mit einem pyrotechnischen Gasgenerator und einem Hochdruckbehälter, bei dem nach dem Anzünden von Treibstoff Treibgase aus einer Öffnung einer Brennkammer ausströmen und gegen eine gegenüber der Öffnung angeordnete Dichtscheibe des Hockdruckbehälters blasen und nach dem Öffnen der Dichtscheibe die Treibgase und Gas aus dem Hochdruckbehälter durch Austrittsöffnungen in einen Gassack strömen.

Ein Gasgenerator dieser Art ist aus der US-A-5 022 674 bekannt.

Die Erfindung schafft demgegenüber einen Hybrid-Gasgenerator mit weiter verbesserten Funktionseigenschaften, insbesondere einem verbesserten Öffnungsverhalten der den Hochdruckbehälter verschließenden Dichtscheibe.

Erfindungsgemäß ist daher bei einem Hybrid-Gasgenerator der eingangs genannten Art der Treibstoff zum Aufbrennen der Dichtscheibe mit Oxidator überbilanziert, und zwischen einem Mischungsraum für das Treibgas und dem Gas aus dem Hochdruckbehälter und den Austrittsöffnungen ist ein aus einem Gitter, Geflecht oder Vlies bestehendes Bauteil angeordnet.

Der wesentliche Vorteil der Erfindung besteht darin, daß infolge der verwendeten Treibstoffrezeptur die den Hochdruckbehälter schließende Dichtscheibe wie bei einem Schweißvorgang kontinuierlich durchbrennt. Hierdurch wird ein Öffnen der Dichtscheibe ohne Knallwirkung erzielt. Der verwendete Treibstoff ist nicht im stöchiometrischen Gleichgewicht bei der Abbrandreaktion, sondern er hat einen Überschuß an oxidierenden Stoffen. Das heißt, daß der Treibstoff mit Oxidator überbilanziert ist. Der Aufbrennvorgang der Dichtscheibe erzeugt einen zeitlich abgestimmten Massenstrom der Gase aus dem Hochdruckbehälter. Weil die Dichtscheibe mit dem Hochdruckbehälter zweckmäßig durch Schweißen, z.B. Laserschweißen oder Elektronenstrahlschweißen, verbunden wird, muß diese, je nachdem ob der Hochdruckbehälter aus Stahl oder Leichtmetall besteht, ebenfalls aus einer Stahlfolie oder einem Leichtmetallblech bestehen. Zwischen einem Mischungsraum für das Treibgas und dem Gas aus dem Hochdruckbehälter und den Austrittsöffnungen für die Gase ist zudem ein aus einem Gitter, Geflecht oder Vlies bestehendes Bauteil angeordnet, das die Gase reinigen und temperieren, den Schall dämpfen und als Katalysator zur Reduzierung des Anteils von unerwünschten Gasanteilen dienen kann. Der erfindungsgemäße Hybridgasgenerator ist einfach aufgebaut und für die automatisierte Herstellung in großen Stückzahlen geeignet.

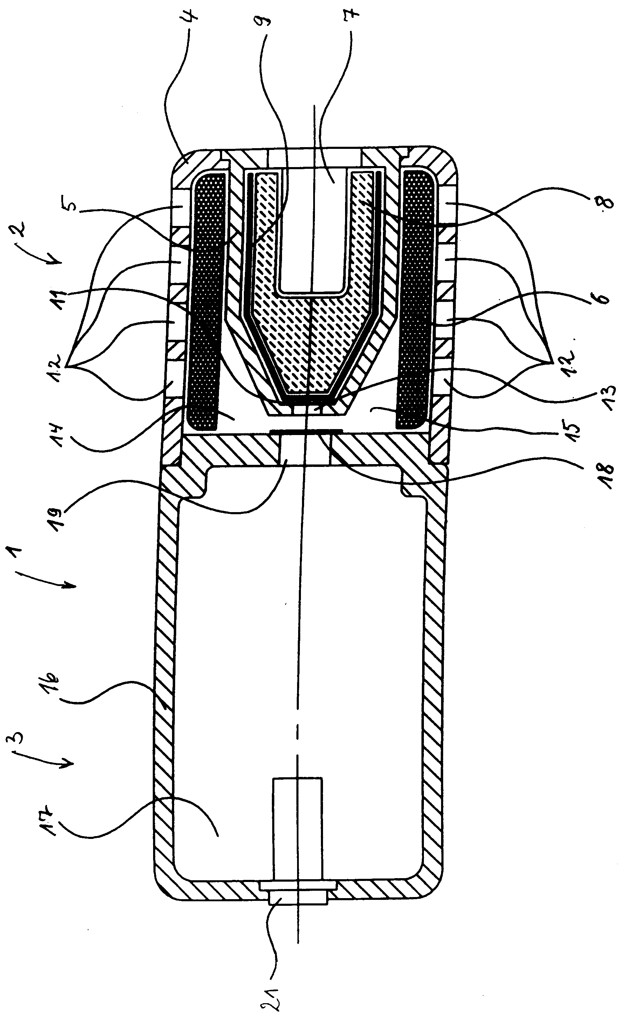

Die Erfindung wird nachstehend anhand der Zeichnung näher erläutert. Die einzige Figur zeigt einen vereinfachten Querschnitt durch einen Hybrid-Gasgenerator.

Ein Hybrid-Gasgenerator 1 besteht aus zwei fest miteinander verbundenen Einheiten. Zum einen aus einem pyrotechnischen Gasgenerator 2 und zum anderen aus einem Hochdruckbehälter 3. Der pyrotechnische Gasgenerator 2 besteht aus einem Mantelgehäuse 4, in dem eine Brennkammer 5 und ein Bauteil 6 untergebracht sind. In der Brennkammer 5 befinden sich ein Anzünder 7, ein Festtreibstoff 8, Einbauten 9 zum Fixieren des Treibstoffes 8 und eine Verdämmung 11. Das Bauteil 6, welches aus einem Gitter, Geflecht oder Vlies besteht und aus einem geeigneten Werkstoff, wie z.B. Metall oder Keramik hergestellt ist, kann als Filter zur Aussonderung von kondensierten Anteilen im Gasstrom, als Temperaturausgleicher, zur Schalldämpfung und als Katalysator zur Reduzierung des Anteils von unerwünschten Gasanteilen dienen. In dem Mantelgehäuse 4 befinden sich Austrittsöffnungen 12 und in der Brennkammer 5 ist eine Ausblasöffnung 13 für Treibgase 14. Zwischen dem Bauteil 6, der Brennkammer 5 und dem Hochdruckbehälter 3 ist ein Mischungsraum 15 vorhanden. Der Hochdruckbehälter 3 hat ein flaschenförmiges Gehäuse 16, in dem sich der größte Teil eines ungiftigen und umweltfreundlichen Gases 17 zum Aufblasen eines hier nicht dargestellten Gassacks befindet. Gegenüber der Ausblasöffnung 13 der Brennkammer 5 befindet sich eine Dichtscheibe 18 vor einer Ausströmöffnung 19. Schließlich ist am hinteren Ende des Hochdruckbehälters 3 eine Druckmeßvorrichtung 21 angebracht. Der Hochdruckbehälter 3 ist aus Stahl oder Leichtmetall gefertigt, dementsprechend ist die mit Laserschweißung aufgesetzte Dichtscheibe 18 aus Stahlfolie oder einem Leichtmetallblech.

Nachfolgend wird die Funktionsweise des Hybrid-Gasgenerators 1 beschrieben. Der Treibstoff 8 in der Brennkammer 5 wird pyrotechnisch mittels des Anzünders 7 angezündet. Durch das Abbrennen des Treibstoffes 8 wird zum einen heißes Treibgas erzeugt und zum anderen ein Druck in der Brennkammer 5 aufgebaut. Die Treibstoffrezeptur mit überbilanziertem Oxidator erzeugt durch die Verbrennung ein chemisch reaktives Gas, welches geeignet ist, wie eine Schweißbrennerflamme zu funktionieren. Bis sich ein stabiler Abbrandprozeß in der Brennkammer 5 eingestellt hat, hält die Verdämmung 11 die Brennkammer 5 verschlossen. Bei ausreichend großem Druck platzt die Verdämmung 11 auf und läßt die heißen Treibgase 14 aus der Brennkammer 5 durch die Ausblasöffnung 13 auf die Dichtscheibe 18 des Hochdruckbehälters 3 treffen. Die Dichtscheibe 18 ist so gestaltet, daß unterschiedliche Massenstromverläufe durch die Ausströmöffnung 19 eingestellt werden können. Zum Einstellen eines anfänglich hohen Kammerdruckgradienten ist die Dichtscheibe 18 mit einem geringen Querschnitt versehen, welcher durch Einkerbungen erzeugt wird. Hingegen wird zum Einstellen eines am Anfang geringen Druckgradienten die Dichtscheibe 18 in der Mitte verstärkt oder an den Rändern geschwächt. Die derart für den jeweiligen Verwendungszweck gestaltete Dichtscheibe 18 wird nun aufgrund der auftreffenden heißen chemisch aggressiven Treibgase 14 zunächst aufgebrannt und kann dann entsprechend ihrer Formgebung weiter durchbrennen und damit die Ausströmöffnung 19 freigeben. Der zeitliche Ablauf des Durchbrennens der Dichtscheibe 18 läßt sich durch geeignete Wahl der Rezeptur des Treibstoffes 8 bezüglich Abbrandgeschwindigkeit, Energie und Oxidatorinhalt sowie durch die geometrischen Abmessungen und Formgebung der Ausblasöffnung 13, der Ausströmöffnung 19, der Verdämmung 11 und - wie oben bereits ausgeführt - der Dichtscheibe 18 einstellen. Weiterhin können durch die Abstände und Anordnung der vorgenannten Bauteile speziell gewünschte zeitliche Abläufe des Öffnungsvorganges und nötige Massenströme der Treibgase 14 und des Hochdruckgases 17 in den zu füllenden Gassack erzeugt werden.

Im Mischungsraum 15 mischen sich nun die Treibgase 14 aus der Brennkammer 5 und die kalten Gase aus dem Hochdruckbehälter 3. Kondensierte (feste und flüssige) Abbrandprodukte der Treibgase 14 bewegen sich durch die Ausblasöffnung 13 wegen ihrer Trägheit weiter durch die Ausströmöffnung 19 in das Gehäuse 16 des Hochdruckbehälters 3, wo sie sich innen an der erkalteten Wandung niederschlagen. Wenn kondensierte Produkte erst im Mischungsraum 15 entstehen, können diese durch die Filterwirkung des Bauteils 6 zurückgehalten werden. Das Bauteil 6 kann auch dazu dienen, unerwünschte Bestandteile des gemischten Gases katalytisch umzuwandeln, sowie über die Wirkdauer des Hybrid-Gasgenerators 1 einen Temperaturausgleich zu schaffen oder im Inneren des Generators entstehenden Schall zu dämpfen. Das generierte Gas verläßt den Mischungsraum 15 abschließend durch die Austrittsöffnungen 12 und steht zum Befüllen des Gassacks zur Verfügung. Während der gesamten Lebens- und Einsatzdauer des Hybrid-Gasgenerators 1 überwacht die Druckmeßvorrichtung 21, die mit einer Temperaturkompensation ausgestattet ist, den Druck im Hochdruckbehälter 3 und meldet einen unvorhergesehenen Druckabfall.

## Patentansprüche

1. Hybrid-Gasgenerator mit einem pyrotechnischen Gasgenerator und einem Hochdruckbehälter, bei dem nach dem Anzünden von Treibstoff Treibgase aus einer Öffnung einer Brennkammer ausströmen und gegen eine gegenüber der Öffnung angeordnete Dichtscheibe des Hockdruckbehälters blasen und nach dem Öffnen der Dichtscheibe die Treibgase und Gas aus dem Hochdruckbehälter durch Austrittsöffnungen in einen Gassack strömen, **dadurch gekennzeichnet,** daß der Treibstoff (8) zum Aufbrennen der Dichtscheibe (18) mit Oxidator überbilanziert ist, und daß zwischen einem Mischungsraum (15) für das Treibgas (14) und dem Gas (17) aus dem Hochdruckbehälter (3) und den Austrittsöffnungen (12) ein aus einem Gitter, Geflecht oder Vlies bestehendes Bauteil (6) angeordnet ist.

2. Hybrid-Gasgenerator nach Anspruch 1, **dadurch gekennzeichnet,** daß die Dichtscheibe (18) aus leicht verbrennbarem Material, wie z.B. Stahlfolie oder Leichtmetallblech, besteht.

3. Hybrid-Gasgenerator nach Anspruch 1 oder 2, **dadurch gekennzeichnet,** daß der Aufbrennvorgang der Dichtscheibe (18) einen zeitlich abgestimmten Massenstrom der Gase (17) aus dem Hochdruckbehälter (3) erzeugt.

4. Hybrid-Gasgenerator nach Anspruch 1, **dadurch gekennzeichnet,** daß die Dichtscheibe (18) mit dem Gehäuse (16) des Hochdruckbehälters (3) verschweißt ist.

5. Hybrid-Gasgenerator nach Anspruch 4, **dadurch gekennzeichnet,** daß die gasdichte Befestigung der Dichtscheibe durch Laserschweißen oder Elektronenstrahlschweißen erfolgt.

6. Hybrid-Gasgenerator nach einem der Ansprüche 1 bis 5, **dadurch gekennzeichnet,** daß die Dichtscheibe (18) durch Einkerbungen mit einem geringen Querschnitt versehen ist.

7. Hybrid-Gasgenerator nach einem der Ansprüche 1 bis 5, **dadurch gekennzeichnet,** daß die Dichtscheibe (18) an ihren Rändern geschwächt ist.

## Claims

1. A hybrid inflator comprising a pyrotechnic inflator and a high-pressure vessel, in which upon ignition of a propellant, propellant gases exit an orifice of a combustion chamber and blow against a sealing disc, arranged opposite the orifice, of the high-pressure vessel, and upon opening the sealing disc the propellant gases and gas from the high-pressure vessel flow through exit ports into a gas bag, **characterized in that** the propellant (8) has an overbalance of oxidant for burning the sealing disc (18) open and that a component (6) consisting of a grid, mesh or fleece is arranged between a mixing chamber (15) for the propellant (14) and the gas (17) from the high-pressure vessel (3) and the exit ports (12).

2. The hybrid inflator according to claim 1, **characterized in that** the sealing disc (18) is made of a readily combustible material such as a steel foil or a light sheet metal.

3. The hybrid inflator according to claim 1 or 2, **characterized in that** the process of burning the sealing disc (18) open generates a timed mass flow of the gases (17) from the high-pressure vessel (3).

4. The hybrid inflator according to claim 1, **characterized in that** the sealing disc (18) is welded to the housing (16) of the high-pressure vessel (3).

5. The hybrid inflator according to claim 4, **characterized in that** the gas-tight attachment of the sealing disc is performed by laser welding or electron beam welding.

6. The hybrid inflator according to any of claims 1 to 5, **characterized in that** the sealing disc (18) is provided with a small cross-section produced by notches.

7. The hybrid inflator according to any of claims 1 to 5, **characterized in that** the sealing disc (18) is weakened at its edges.

## Revendications

1. Générateur de gaz hybride comprenant un générateur pyrotechnique de gaz et un récipient sous pression élevée, dans lequel, après allumage du combustible, des gaz propulseurs sortent par un trou d'une chambre de combustion et forment une insufflation contre un disque d'étanchéité du récipient sous pression élevée qui est placé en face du trou et, après ouverture du disque d'étanchéité, les gaz propulseurs et le gaz provenant du récipient sous pression élevée s'écoulent par des trous de sortie pour pénétrer dans un coussin à gaz, caractérisé en ce que le combustible (8) destiné à brûler le disque d'étanchéité (18) comprend un excès d'oxydant et en ce qu'un composant (6) formé d'une grille, d'un treillis ou d'un voile est disposé entre une chambre (15) de mélange du gaz propulseur (14) et du gaz (17) sortant du récipient sous pression élevée (3) et les trous de sortie (12).

2. Générateur de gaz hybride selon la revendication 1, caractérisé en ce que le disque d'étanchéité (18) est en une matière facilement combustible, telle que par exemple une feuille d'acier ou une tôle de métal léger.

3. Générateur de gaz hybride selon la revendication 1 ou 2, caractérisé en ce que le processus de brûlage du disque d'étanchéité (18) génère un flux massique temporellement déterminé des gaz (17) en provenance du récipient sous pression élevée (3).

4. Générateur de gaz hybride selon la revendication 1, caractérisé en ce que le disque d'étanchéité (18) est soudé à l'enveloppe (16) du récipient sous pression élevée (3).

5. Générateur de gaz hybride selon la revendication 4, caractérisé en ce que la fixation hermétique du disque d'étanchéité est effectuée par soudage au laser ou soudage par faisceau électronique.

6. Générateur de gaz hybride selon l'une des revendications 1 à 5, caractérisé en ce que le disque d'étanchéité (18) comporte des encoches de faible section.

7. Générateur de gaz hybride selon l'une des revendications 1 à 5, caractérisé en ce que le disque d'étanchéité (18) est affaibli sur les bords.
